# EUROPÄISCHE PATENTSCHRIFT

(11) **EP 3 678 885 B1**
(45) Veröffentlichungstag und Bekanntmachung des Hinweises auf die Patenterteilung: **05.01.2022**
(21) Anmeldenummer: 18765032.0
(22) Anmeldetag: 21.08.2018
(51) Int. Cl.: B60K 23/08, B60K 6/52, B60W 10/02, B60W 10/04, B60W 10/08, B60K 6/387, B60K 17/35, B60W 10/119, B60W 30/20

(54) **VERFAHREN ZUM BETREIBEN EINES ANTRIEBSSTRANGS EINES KRAFTWAGENS, SOWIE ANTRIEBSSTRANG FÜR EINEN KRAFTWAGEN**
METHOD FOR OPERATING A DRIVE TRAIN OF A MOTOR VEHICLE, AND DRIVE TRAIN FOR A MOTOR VEHICLE
PROCÉDÉ POUR FAIRE FONCTIONNER UNE CHAI NE CINE MATIQUE D'UN VÉHICULE AUTOMOBILE, ET CHAÎNE CINE MATIQUE CONÇUE POUR UN VÉHICULE AUTOMOBILE

(30) Priorität: 04.09.2017 DE 102017215477
(43) Veröffentlichungstag der Anmeldung: 15.07.2020
(73) Patentinhaber: Audi AG, 85045 Ingolstadt (DE)
(72) Erfinder: WEIN, Michael, 92358 Seubersdorf (DE); BÄR, Michael, 85053 Ingolstadt (DE)
(86) Internationale Anmeldenummer: PCT/EP2018/072571
(87) Internationale Veröffentlichungsnummer: WO 2019/042828

(56) Entgegenhaltungen:
- EP-A1- 2 226 228
- EP-A1- 2 540 590
- EP-A1- 3 056 372
- US-B1- 7 497 285

## Beschreibung

Die Erfindung betrifft ein Verfahren zum Betreiben eines Antriebsstrangs eines Kraftwagens, insbesondere eines Personenkraftwagens, gemäß dem Oberbegriff von Patentanspruch 1. Ferner betrifft die Erfindung einen Antriebsstrang für einen Kraftwagen, insbesondere für einen Personenkraftwagen, gemäß dem Oberbegriff von Patentanspruch 6.

Derartige Verfahren zum Betreiben von Antriebssträngen von Kraftwagen, insbesondere von Personenkraftwagen, und derartige Antriebsstränge für Kraftwagen sind aus dem allgemeinen Stand der Technik bereits hinlänglich bekannt. Der Antriebsstrang weist einen zu- und abschaltbaren Vierradantrieb, wenigstens zwei miteinander kämmende Zahnräder und wenigstens eine Kupplung auf, welche zum Abschalten des Vierradantriebs von einem geschlossenen Zustand in einen geöffneten Zustand umschaltbar ist. Dies bedeutet, dass im Rahmen des jeweiligen Verfahrens der Vierradantrieb abgeschaltet wird, indem die Kupplung des Antriebsstrangs geöffnet wird.

Des Weiteren offenbart die EP 2 786 910 A1 eine Steuereinrichtung für ein Hybridfahrzeug, welches mit einer Verbrennungskraftmaschine ausgestattet ist. Außerdem umfasst das Hybridfahrzeug eine elektrische Maschine.

Außerdem ist aus der DE 10 2007 037 530 A1 eine Getriebevorrichtung für ein Fahrzeug bekannt.

Darüber hinaus ist aus der EP 2 540 590 A1 ein Leistungsübertragungsgerät für ein Hybridfahrzeug mit Vierradantrieb bekannt.

Aufgabe der vorliegenden Erfindung ist es, ein Verfahren und einen Antriebsstrang der eingangs genannten Art derart weiterzuentwickeln, dass ein besonders komfortabler Betrieb realisierbar ist.

Diese Aufgabe wird erfindungsgemäß durch ein Verfahren mit den Merkmalen des Patentanspruchs 1, sowie durch einen Antriebsstrang mit den Merkmalen des Patentanspruchs 6 gelöst. Vorteilhafte Ausgestaltungen mit zweckmäßigen Weiterbildungen der Erfindung sind in den übrigen Ansprüchen angegeben.

Ein erster Aspekt der Erfindung betrifft ein Verfahren zum Betreiben eines Antriebsstrangs eines Kraftwagens, insbesondere eines Personenkraftwagens. Der Antriebsstrang beziehungsweise der Kraftwagen weist einen zuund abschaltbaren Vierradantrieb und wenigstens zwei miteinander kämmende Zahnräder auf. Unter dem Merkmal, dass die Zahnräder miteinander kämmen ist insbesondere zu verstehen, dass die Zahnräder jeweilige Verzahnungen aufweisen, welche miteinander in Eingriff stehen. Hierdurch wirken die Zahnräder formschlüssig zusammen, sodass wenigstens ein Drehmoment von einem der Zahnräder auf das jeweils andere Zahnrad übertragen werden kann und umgekehrt. Bei dem Verfahren wird der Vierradantrieb abgeschaltet, indem wenigstens eine Kupplung des Antriebsstrangs geöffnet wird. Die Kupplung wird beispielsweise auch als Vierrad- oder Allradkupplung bezeichnet.

Um nun einen besonders komfortablen Betrieb des Antriebsstrangs und somit des Kraftwagens insgesamt realisieren zu können, ist es erfindungsgemäß vorgesehen, dass ein aus dem Abschalten resultierender Anlagewechsel der Zahnräder mittels einer elektrischen Maschine aktiv, das heißt gezielt abgebremst wird. Unter dem aktiven beziehungsweise gezielten Abbremsen des Anlagewechsels ist zu verstehen, dass die elektrische Maschine gezielt betrieben, insbesondere gesteuert oder geregelt, wird, um den Anlagewechsel gezielt und somit bewusst beziehungsweise gewünscht abzubremsen. Unter dem Abbremsen des Anlagewechsels ist insbesondere zu verstehen, dass der Anlagewechsel langsamer beziehungsweise mit einer geringeren Drehzahl oder Drehgeschwindigkeit der Zahnräder erfolgt als wenn ein solches gezieltes Abbremsen unterbliebe. Durch das gezielte Abbremsen des Anlagewechsels kann dieser sanft und somit geräuscharm oder geräuschlos erfolgen, sodass aus dem Abschalten des Vierradantriebs resultierende, übermäßige Geräusche vermieden werden können.

Der Erfindung liegt insbesondere die Erkenntnis zugrunde, dass es im Zuge des Abschaltens des Vierradantriebs herkömmlicherweise zu einer ruckartigen Entlastung beziehungsweise Entspannung des auch als Triebstrang bezeichneten Antriebsstrangs kommen kann. Bei einer solchen ruckartigen Entlastung führen bei herkömmlichen Antriebssträngen Zahnräder, welche miteinander in Eingriff stehen und beispielsweise in einem Achsgetriebe oder Hauptgetriebe zum Einsatz kommen, einen Anlagewechsel ruckartig und somit mit einer hohen Drehzahl beziehungsweise Drehgeschwindigkeit aus, woraus Geräusche resultieren können. Diese Geräusche können von Insassen des Kraftwagens akustisch wahrgenommen werden, wodurch der Fahrkomfort beeinträchtigt werden kann. Diese Probleme und Nachteile können nun mittels des erfindungsgemäßen Verfahrens vermieden werden, da der beispielsweise auch als Zahnflankenwechsel bezeichnete Anlagewechsel aktiv und somit gezielt abgebremst wird.

Der Anlagewechsel wird beispielsweise durch ein auf zumindest eines der Zahnräder wirkendes und aus dem Abschalten des Vierradantriebs resultierendes Drehmoment bewirkt, wobei beispielsweise im Rahmen des Abbremsens des Anlagewechsels diesem Drehmoment mittels der elektrischen Maschine aktiv entgegengewirkt wird. Hierdurch kann ein übermäßig ruckartiger Anlagewechsel sicher vermieden werden.

Der Antriebsstrang weist beispielsweise wenigstens einen von der elektrischen Maschine unterschiedlichen, zusätzlich dazu vorgesehenen Antriebsmotor auf, welcher beispielsweise als Verbrennungskraftmaschine ausgebildet ist. Außerdem umfasst der Antriebsstrang beispielsweise eine von dem Antriebsmotor antreibbare erste Achse und eine von dem Antriebsmotor über die Kupplung antreibbare zweite Achse. Die erste Achse ist beispielsweise eine Primärachse, während die zweite Achse eine Sekundärachse des Antriebsstrangs ist. Dabei wird vorzugsweise bei dem Abschalten des Vierradantriebs die zweite Achse von dem Antriebsmotor abgekoppelt, insbesondere während die erste Achse mit dem Antriebsmotor gekoppelt bleibt beziehungsweise von dem Antriebsmotor antreibbar ist.

Der Antriebsstrang umfasst beispielsweise wenigstens oder genau vier Räder, welche beispielsweise grundsätzlich von dem Antriebsmotor antreibbar sind. Zwei erste der Räder sind beispielsweise der ersten Achse zugeordnet, sodass die erste Achse die ersten Räder umfasst. Zwei zweite der Räder sind beispielsweise der zweiten Achse zugeordnet, sodass die zweite Achse die zweiten Räder umfasst. Ist der Vierradantrieb zugeschaltet beziehungsweise aktiviert, und stellt der Antriebsmotor ein auch als Antriebsmoment oder Antriebsdrehmoment bezeichnetes Drehmoment bereit, so werden die vier Räder von dem Antriebsmotor, das heißt mittels des Antriebsmoments angetrieben, insbesondere wenn bei dabei zugeschaltetem Vierradantrieb die vier Räder mit dem Antriebsmotor gekoppelt sind. Ist der Vierradantrieb zugeschaltet beziehungsweise aktiviert, so wird der Antriebsstrang beziehungsweise der Kraftwagen in einem Vierradbetrieb betrieben. Weist der Antriebsstrang beispielsweise genau die vier Räder auf, so wird der Vierradantrieb auch als Allradantrieb und der Vierradbetrieb auch als Allradbetrieb bezeichnet.

Ist der Allradantrieb jedoch abgeschaltet beziehungsweise deaktiviert, so sind beispielsweise bezogen auf die vier Räder lediglich die ersten Räder von dem Antriebsmotor antreibbar, da bezogen auf die vier Räder lediglich die ersten Räder mit dem Antriebsmotor gekoppelt sind, während die zweiten Räder von dem Antriebsmotor entkoppelt sind. Stellt somit dann, wenn der Vierradantrieb abgeschaltet ist, der Antriebsmotor ein Antriebsmoment bereit, so werden bezogen auf die vier Räder lediglich die ersten Räder angetrieben, während ein durch den Antriebsmotor bewirktes Antreiben der zweiten Räder unterbleibt. Ist der Vierradantrieb abgeschaltet, so wird der Antriebsstrang beziehungsweise der Kraftwagen in einem Zweiradbetrieb betreiben. In dem Zweiradbetrieb ist die Kupplung geöffnet, wobei die Kupplung in dem Vierradbetrieb geschlossen ist.

Die Kupplung ist beispielsweise als Reibkupplung beziehungsweise reibschlüssige Kupplung ausgebildet, wobei die Kupplung insbesondere als Lamellenkupplung ausgebildet sein kann. Ist die Kupplung geschlossen beziehungsweise der Vierradantrieb zugeschaltet, so sind die auch als Antriebsachsen bezeichneten Achsen des Kraftwagens über die Kupplung miteinander gekoppelt. Diese Kopplung der beiden Achsen führt beispielsweise bei einer Kurvenfahrt und/oder durch Reifenumfangsunterschiede der Räder zu Verspannungen in dem Antriebsstrang, wenn die Kupplung geschlossen ist. Wird die Kupplung dann geöffnet, um beispielsweise ein besonders vorteilhaftes Rangieren, insbesondere mit einem nur geringen Wendekreis, zu ermöglichen, kann es bei herkömmlichen Antriebssträngen zu der oben beschriebenen, ruckartigen Entlastung beziehungsweise Entspannung des Antriebsstrangs kommen. Um dabei einen übermäßig ruckartigen Anlagewechsel und daraus resultierende Geräusche vermeiden zu können, wird die elektrische Maschine erfindungsgemäß beim Abschalten des Vierradantriebs gezielt betrieben, insbesondere gesteuert oder geregelt, um den Anlagewechsel gezielt und somit aktiv abzubremsen.

Vorzugsweise kommt der elektrischen Maschine eine Doppelfunktion zu, da sie zum einen zum Abbremsen des Anlagewechsels genutzt wird. Zum anderen wird die elektrische Maschine beispielsweise als Generator und/oder Elektromotor genutzt. Der Generator wird auch als Triebstranggenerator bezeichnet. Um die elektrische Maschine als Generator zu nutzen, wird die elektrische Maschine beispielsweise in einem Generator betrieb betrieben. Dabei wird die elektrische Maschine beispielsweise von dem Antriebsmotor und/oder über wenigstens zwei der Räder und somit mittels kinetischer Energie des Kraftwagens angetrieben, sodass beispielsweise zumindest ein Teil der kinetischen Energie und/oder von dem Antriebsmotor bereitgestellte Energie mittels des Generators in elektrische Energie umgewandelt werden kann.

Alternativ oder zusätzlich wird die elektrische Maschine beispielsweise als Elektromotor betrieben, um beispielsweise wenigstens zwei der Räder und somit den Kraftwagen insgesamt anzutreiben. Hierzu stellt die elektrische Maschine in ihrem Motorbetrieb Drehmomente zum Antreiben von wenigstens zwei der Räder bereit. Somit ist es beispielsweise denkbar, die beispielsweise bei einem Hybridfahrzeug ohnehin vorhandene elektrische Maschine zu nutzen, um mittels der elektrischen Maschine den Anlagewechsel gezielt abzubremsen. Die Verwendung einer elektrischen Maschine an einem Antriebsstrang ist grundsätzlich nachteilhaft hinsichtlich der Vermeidung von aus Anlagewechseln resultierenden Geräuschen, da die elektrische Maschine, insbesondere ihr Rotor, üblicherweise eine hohe Masse aufweist, welche den Anlagewechsel und die daraus resultierenden Geräusche verstärken kann. Dies ist insbesondere dann der Fall, wenn die elektrische Maschine beim Abschalten des Allradantriebs wie bei herkömmlichen Antriebssträngen nicht gezielt betrieben wird, um den Anlagewechsel zu dämpfen. Erfindungsgemäß ist es nun jedoch möglich, die beispielsweise ohnehin vorgesehene elektrische Maschine zu nutzen, um den Anlagewechsel abzubremsen und somit zu dämpfen, sodass die elektrische Maschine den Anlagewechsel nicht etwa verstärkt, sondern abbremst beziehungsweise dämpft.

Das Abbremsen des Anlagewechsels ist somit eine Zusatzfunktion, welche ohne zusätzliche Kosten und ohne zusätzliche Bauteile realisiert werden kann. In der Folge kann ein besonders komfortabler Betrieb realisiert werden. Außerdem können zusätzliche Komponenten wie beispielsweise Dämpfungs- und Reibungselemente zum Dämpfen des Anlagewechsels vermieden werden, sodass die Teileanzahl, der Bauraumbedarf und die Kosten des Antriebsstrangs gering gehalten werden können. Ferner kann hierdurch eine Reibungsoptimierung dargestellt werden, sodass ein besonders effizienter und somit energieverbraucharmer Betrieb des Antriebsstrangs realisierbar ist.

Eine weitere Ausführungsform zeichnet sich dadurch aus, dass der Antriebsstrang wenigstens ein Getriebe, insbesondere ein Hauptgetriebe, aufweist, über welches die Achsen von dem Antriebsmotor antreibbar sind.

Dabei hat es sich als besonders vorteilhaft gezeigt, wenn zum Abbremsen des Anlagewechsels mittels der elektrischen Maschine ein Zugbetrieb des Getriebes bewirkt wird. Mit anderen Worten ist es vorzugsweise vorgesehen, dass das Getriebe mittels der elektrischen Maschine unter Zug gehalten wird, um den Anlagewechsel zu dämpfen. Bei herkömmlichen Antriebssträngen kommt es beim Abschalten des Vierradantriebs zumindest kurzzeitig zu einem Schubbetrieb des Getriebes, wobei in Folge des Schubbetriebs ein ruckartiger und somit Geräusche verursachender Anlagewechsel auftritt. Dies kann nun gezielt vermieden werden.

Schließlich hat es sich als besonders vorteilhaft gezeigt, wenn zum Bewirken des Zugbetriebs des Getriebes die elektrische Maschine wenigstens einen Drehmoment bereitstellt, welches von der elektrischen Maschine in das Getriebe eingeleitet wird. Beispielsweise wird die elektrische Maschine dabei als Elektromotor betrieben, um einem übermäßig ruckartigen Anlagewechsel gezielt entgegenwirken zu können.

Ein zweiter Aspekt der Erfindung betrifft einen Antriebsstrang für einen Kraftwagen, insbesondere für einen Personenkraftwagen. Der Antriebsstrang weist einen zu- und abschaltbaren Vierradantrieb, wenigstens zwei miteinander kämmende Zahnräder und wenigstens eine Kupplung auf, welche zum Abschalten des Vierradantriebs von einem geschlossenen Zustand in einen geöffneten Zustand umschaltbar ist.

Um nun einen besonders komfortablen Betrieb des Antriebsstrangs und somit des Kraftwagens insgesamt auf besonders einfache Weise realisieren zu können, ist es erfindungsgemäß vorgesehen, dass der Antriebsstrang wenigstens eine elektrische Maschine aufweist, welche dazu ausgebildet ist, einen aus dem Abschalten resultierenden Anlagewechsel der Zahnräder aktiv abzubremsen und somit zu dämpfen. Mit anderen Worten ist der erfindungsgemäße Antriebsstrang zum Durchführen eines erfindungsgemäßen Verfahrens ausgebildet. Vorteile und vorteilhafte Ausgestaltungen des ersten Aspekts der Erfindung sind als Vorteile und vorteilhafte Ausgestaltungen des zweiten Aspekts der Erfindung anzusehen und umgekehrt.

Bei dem zweiten Aspekt der Erfindung ist somit beispielsweise eine elektronische Recheneinrichtung vorgesehen, welche zum Ansteuern und somit zum Regeln oder Steuern der elektrischen Maschine ausgebildet ist. Insbesondere ist die elektronische Recheneinrichtung dazu ausgebildet, die elektrische Maschine, insbesondere in Abhängigkeit von wenigstens einem einen aktuellen Zustand des Antriebsstrangs charakterisierenden Parameter, derart gezielt anzusteuern, dass die elektrische Maschine den Anlagewechsel aktiv und somit gezielt dämpft.

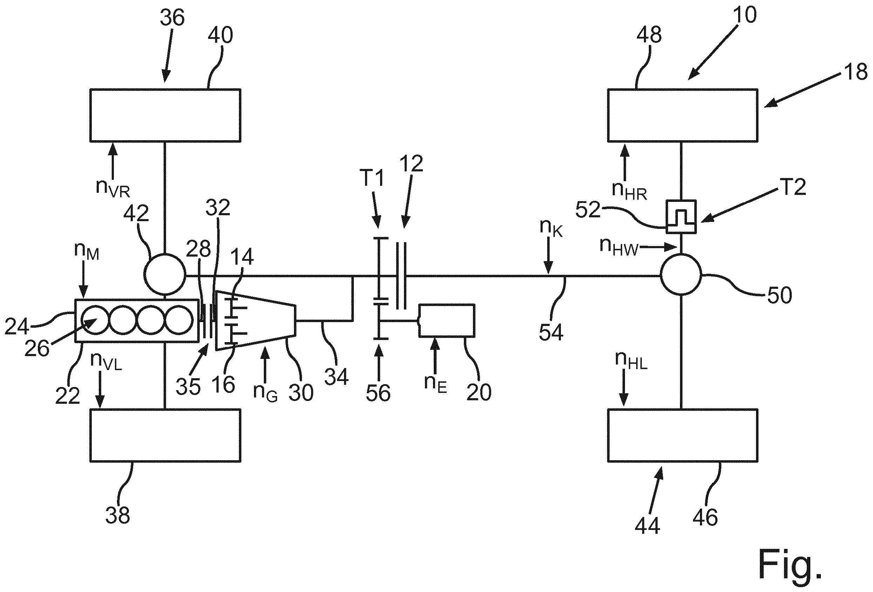

Weitere Vorteile, Merkmale und Einzelheiten der Erfindung ergeben sich aus der nachfolgenden Beschreibung eines bevorzugten Ausführungsbeispiels sowie anhand der Zeichnung. Die vorstehend in der Beschreibung genannten Merkmale und Merkmalskombinationen sowie die nachfolgend in der Figurenbeschreibung genannten und/oder in der einzigen Figur alleine gezeigten Merkmale und Merkmalskombinationen sind nicht nur in der jeweils angegebenen Kombination, sondern auch in anderen Kombinationen oder in Alleinstellung verwendbar, ohne den Rahmen der Erfindung zu verlassen.

Die Zeichnung zeigt in der einzigen Fig. eine schematische Darstellung eines erfindungsgemäßen Antriebsstrangs für eine Kraftwagen, wobei der Antriebsstrang zum Durchführen eines erfindungsgemäßen Verfahrens ausgebildet ist.

Die einzige Fig. zeigt in einer schematischen Darstellung einen im Ganzen mit 10 bezeichneten Antriebsstrang für einen beispielsweise als Personenkraftwagen ausgebildeten Kraftwagen. Der Antriebsstrang 10 umfasst eine beispielsweise als Reibkupplung und dabei insbesondere als Lamellenkupplung ausgebildete Kupplung 12, welche auch als Allradkupplung bezeichnet wird. Des Weiteren umfasst der Antriebsstrang 10 wenigstens zwei in der Fig. besonders schematisch dargestellte und miteinander kämmende Zahnräder 14 und 16. Die Zahnräder 14 und 16 weisen jeweilige Verzahnungen auf, welche miteinander in Eingriff stehen. Dadurch wirken die Zahnräder 14 und 16 formschlüssig zusammen, sodass beispielsweise Drehmomente von einem der Zahnräder 14 und 16 auf das jeweils andere Zahnrad 16 beziehungsweise 14 übertragen werden können beziehungsweise umgekehrt. Der Antriebsstrang 10 weist ferner einen zu- und abschaltbaren Vierradantrieb 18 auf. Um den beispielsweise zunächst abgeschalteten und somit deaktivierten Vierradantrieb 18 zuzuschalten und somit zu aktivieren, wird die Kupplung 12 beispielsweise aus von einem geöffneten Zustand in einen geschlossenen Zustand umgeschaltet. Um den beispielsweise zunächst zugeschalteten und somit aktivierten Vierradantrieb 18 abzuschalten und somit zu deaktivieren, wird die Kupplung 12 beispielsweise aus ihrem geschlossenen Zustand in ihren geöffneten Zustand umgeschaltet. Das Umschalten der Kupplung 12 von dem geöffneten Zustand in den geschlossenen Zustand wird auch als Schließen der Kupplung 12 bezeichnet, wobei das Umschalten der Kupplung 12 aus dem geschlossenen Zustand in den geöffneten Zustand auch als Öffnen der Kupplung 12 bezeichnet wird.

Im Folgenden wird anhand der Fig. ein Verfahren zum Betreiben des Antriebsstrangs 10 erläutert. Bei dem Verfahren wird der zunächst zugeschaltete Vierradantrieb 18 abgeschaltet, indem zumindest die Kupplung 12, welche auch als Allradkupplung bezeichnet wird, geöffnet wird.

Um nun einen besonders komfortablen Betrieb des Antriebsstrangs 10 und somit des Kraftwagens insgesamt realisieren zu können, ist es bei dem Verfahren vorgesehen, dass ein aus dem Abschalten des Vierradantriebs 18 resultierender Anlagewechsel der Zahnräder 14 und 16 mittels einer elektrischen Maschine 20 des Antriebsstrangs 10 aktiv abgebremst und somit gedämpft wird. Dadurch können übermäßige, aus dem Anlagewechsel resultierende Geräusche vermieden werden, sodass ein besonders hoher Fahrkomfort darstellbar ist.

Aus der Fig. ist erkennbar, dass der Antriebsstrang 10 wenigstens einen von der elektrischen Maschine unterschiedlichen, zusätzlich dazu vorgesehenen Antriebsmotor 22 umfasst, welcher vorliegend als Verbrennungskraftmaschine beziehungsweise Verbrennungsmotor ausgebildet ist. Alternativ ist es denkbar, dass der Antriebsmotor 22 als weitere elektrische Maschine ausgebildet ist. Der vorliegend als Verbrennungsmotor ausgebildete Antriebsmotor 22 umfasst ein Zylindergehäuse 24, durch welches mehrere Brennräume in Form von Zylindern 26 gebildet sind. Der Antriebsmotor 22 umfasst eine Abtriebswelle 28, welche beispielsweise als Kurbelwelle ausgebildet ist. Der Antriebsmotor 22 kann, insbesondere in einem Zugbetrieb des Antriebsmotors 22, über die Abtriebswelle Drehmomente zum Antreiben des Kraftwagens bereitstellen, wobei diese Drehmomente zum Antreiben des Kraftwagens als Antriebsmomente oder Antriebsdrehmomente bezeichnet werden.

Der Antriebsstrang 10 umfasst ferner ein als Hauptgetriebe bezeichnetes Getriebe 30, welches beispielsweise die Zahnräder 14 und 16 umfasst. Das Getriebe 30 weist dabei eine Getriebeeingangswelle 32 auf, welche beispielsweise über ein Anfahrelement 35 von der Abtriebswelle 28 und somit von dem Antriebsmotor 22 antreibbar ist. Das Anfahrelement 35 ist beispielsweise als reibschlüssige Kupplung und somit als Reibkupplung beziehungsweise Trennkupplung ausgebildet. Das Getriebe 30 weist ferner eine Getriebeausgangswelle 34 auf, über welche das Getriebe 30 Drehmomente zum Antreiben des Kraftwagens bereitstellen kann. Die Getriebeausgangswelle 34 ist somit von der Getriebeeingangswelle 32 und über die und über das Anfahrelement 35 von der Abtriebswelle 28 antreibbar. Dabei ist beispielsweise die Kupplung 12 von der Getriebeausgangswelle 34 antreibbar, sodass die Kupplung 12 an sich über die Getriebeausgangswelle 34, die Getriebeeingangswelle 32 und das Anfahrelement 35 von der Abtriebswelle 28 und somit von dem Antriebsmotor 22 antreibbar ist. Mit anderen Worten können beispielsweise die von dem Antriebsmotor 22 über die Abtriebswelle 28 bereitgestellten Antriebsmomente über die Abtriebswelle 28, das Anfahrelement 35, die Getriebeeingangswelle 32 und die Getriebeausgangswelle 34 in die Kupplung 12 eingeleitet werden.

Der Antriebsstrang 10 umfasst ferner eine als Vorderachse 36 ausgebildete erste Achse, welche auch als Primärachse bezeichnet wird, und erste Räder in Form von Vorderrädern 38 und 40 aufweist. Die Vorderräder 38 und 40 sind, insbesondere unter Umgehung der Kupplung 12, über das Getriebe 30 von dem Antriebsmotor 22 antreibbar. Dabei weist die Vorderachse 36 ein von dem Getriebe 30 unterschiedliches, zusätzlich dazu vorgesehenes Achsgetriebe 42 auf, welches auch als Vorderachsgetriebe bezeichnet wird und als Differenzial, insbesondere als Kegelraddifferenzial, ausgebildet ist.

Des Weiteren umfasst der Antriebsstrang 10 eine zweite Achse in Form einer Hinterachse 44, welche zweite Räder in Form von Hinterrädern 46 und 48 aufweist. Die Hinterachse 44 umfasst dabei ein von dem Getriebe 30 und von dem Achsgetriebe 42 unterschiedliches, zusätzlich dazu vorgesehenes zweites Achsgetriebe 50, welches auch als Hinterachsgetriebe bezeichnet wird und beispielsweise als Differenzial, insbesondere als Kegelraddifferenzialgetriebe, ausgebildet ist.

Die Vorderräder 38 und 40 sind über das Achsgetriebe 42 und das Hauptgetriebe von dem Antriebsmotor 22 antreibbar. Die Hinterräder 46 und 48 sind über das Achsgetriebe 50, die Kupplung 12 und das Hauptgetriebe von dem Antriebsmotor 22 antreibbar. Ist der Vierradantrieb 18 abgeschaltet, indem die Kupplung 12 geöffnet ist, so sind die Hinterachse 44 und somit die Hinterräder 46 und 48 von dem Antriebsmotor 22 entkoppelt, während die Vorderachse 36 und somit die Vorderräder 38 und 40 mit dem Antriebsmotor 22 gekoppelt sind. Hierdurch werden dann, wenn der Antriebsmotor 22 Antriebsmomente bereitstellt, bezogen auf die vier Räder lediglich die Vorderräder 38 und 40, nicht jedoch die Hinterräder 46 und 48 angetrieben, sodass der Antriebsstrang 10 in einem Zweiradbetrieb betrieben wird. Ist jedoch der Vierradantrieb 18 zugeschaltet, indem die Kupplung 12 geschlossen ist, so werden dann, wenn der Antriebsmotor 22 Antriebsmomente bereitstellt, sowohl die Vorderräder 38 und 40 als auch die Hinterräder 46 und 48 angetrieben, sodass der Antriebsstrang 10 in einem Vierradbetrieb betrieben wird. Da der Antriebsstrang 10 bei dem in der Fig. veranschaulichten Ausführungsbeispiel lediglich die vier Räder aufweist, ist der Vierradantrieb 18 ein Allradantrieb, sodass der Vierradbetrieb ein Allradbetrieb ist.

Ist die Kupplung 12 somit geöffnet, so sind die Hinterräder 46 und 48 von dem Antriebsmotor 22 entkoppelt beziehungsweise abgekoppelt. Somit wird die Kupplung 12 genutzt, um eine erste Trennstelle T1 zu schaffen.

Zur Realisierung einer gegenüber der ersten Trennstelle T1 hinteren, zweiten Trennstelle T2 kommt eine vorliegend als Klauenkupplung 52 ausgebildete, formschlüssige Koppeleinrichtung zum Einsatz. Die Klauenkupplung 52 ist optional vorgesehen und könnte Entfallen. Die Klauenkupplung 52 ist zwischen wenigstens einer Entkoppelstellung und wenigstens einer Koppelstellung verstellbar. In der Entkoppelstellung ist ein Kraftfluss in dem Antriebsstrang 10 an der zweiten Trennstelle T2 unterbrochen. In der Koppelstellung ist der Kraftfluss in dem Antriebsstrang 10 an der zweiten Trennstelle T2 formschlüssig mittels der Klauenkupplung 52 geschlossen. In der Koppelstellung sind die Hinterräder 46 und 48 über die Klauenkupplung 52 formschlüssig mit einer als Kardanwelle 54 ausgebildeten Welle des Antriebsstrangs 10 gekoppelt, wobei die Kardanwelle 54 über die Kupplung 12 und das Getriebe 30 von dem Antriebsmotor 22 antreibbar ist beziehungsweise angetrieben wird, wenn die Kupplung 12 geschlossen ist und der Antriebsmotor 22 Antriebsmomente bereitstellt. Ist somit die Klauenkupplung 52 geschlossen, so können die Hinterräder 46 und 48 formschlüssig von der Kardanwelle 54 angetrieben werden, insbesondere dann, wenn die Kardanwelle 54 angetrieben wird. In der Entkoppelstellung jedoch sind die Hinterräder 46 und 48 von der Kardanwelle 54 entkoppelt, worunter zu verstehen ist, dass in der Entkoppelstellung die Klauenkupplung 52 die Hinterräder 46 und 48 nicht über die Klauenkupplung 52 mit der Kardanwelle 54 gekoppelt sind. Somit können in der Entkoppelstellung der Klauenkupplung 52 die Hinterräder 46 und 48 nicht über die Klauenkupplung 52 von der Kardanwelle 54 angetrieben werden und umgekehrt.

Vorzugsweise sind dann, wenn der Vierradantrieb 18 abgeschaltet ist, sowohl die Kupplung 12 als auch die Klauenkupplung 52 geöffnet, sodass die Kardanwelle 54 stillgelegt ist und weder von den Hinterrädern 46 und 48 noch von dem Antriebsmotor 22 angetrieben wird. Dadurch kann ein besonders effizienter Zweiradbetrieb dargestellt werden.

Die elektrische Maschine 20, insbesondere ihr Rotor, ist, insbesondere über eine optional vorgesehene Stirnradstufe 56, beispielsweise mit der Getriebeausgangswelle 34 gekoppelt. Die elektrische Maschine 20 ist beispielsweise in einem Motorbetrieb und somit als Elektromotor und/oder in einem Generatorbetrieb und somit als Generator betreibbar. In dem Motorbetrieb kann die elektrische Maschine 20 beispielsweise Drehmomente bereitstellen, mittels welchen die Räder, insbesondere je nachdem ob der Vierradantrieb 18 zugeschaltet oder abgeschaltet ist, angetrieben werden können. Bei zugeschaltetem Vierradantrieb 18 kann die elektrische Maschine 20 die Vorderräder 38 und 40 und die Hinterräder 46 und 48 antreiben, während die elektrische Maschine 20 bei abgeschaltetem Vierradantrieb 18 lediglich die Vorderräder 38 und 40 antreiben kann. Die elektrische Maschine 20 ist somit beispielsweise ein zusätzlich zum Antriebsmotor 22 vorgesehener Antriebsmotor, mittels welchem die Räder elektrische angetrieben werden können. Somit ist der Kraftwagen beispielsweise als Hybridfahrzeug ausgebildet.

Darüber hinaus sind jeweilige Drehzahlsensoren vorgesehen, mittels welchem jeweilige Drehzahlen der Vorderräder 38 und 40, der Abtriebswelle 28, der elektrischen Maschine 20, insbesondere des Rotors der elektrischen Maschine 20, der Kardanwelle 54, der Hinterräder 46 und 48 und beispielsweise eine Drehzahl einer Seitenwelle oder eines Tellerrads des Achsgetriebes 50 erfassbar sind. Außerdem ist beispielsweise ein Drehzahlsensor zum Erfassen eines Drehzahl des Getriebes 30 vorgesehen, wobei es sich bei der Drehzahl des Getriebes 30 um eine Drehzahl der Getriebeeingangswelle 32 oder der Getriebeausgangswelle 34 handeln kann. Dabei bezeichnet in der Fig.:
- n_{VL} die Drehzahl des Vorderrads 38
- n_{M} die Drehzahl der Abtriebswelle 28
- n_{VR} die Drehzahl des Vorderrads 40
- n_{G} die Drehzahl des Getriebes 30
- n_{E} die Drehzahl der elektrischen Maschine 20, insbesondere ihres Rotors
- n_{K} die Drehzahl der Kardanwelle 54
- n_{HL} die Drehzahl des Hinterrads 46
- n_{HR} die Drehzahl des Hinterrads 48
- n_{HW} die Drehzahl der Seitenwelle beziehungsweise des Tellerrads

Im Zuge des Abschaltens des Vierradantriebs 18 wird die Hinterachse 44 von dem Antriebsmotor 22 abgekoppelt, in dem die Kupplung 12 sowie gegebenenfalls die Klauenkupplung 52 geöffnet wird beziehungsweise werden. Dabei wird beispielsweise zum Abbremsen des Anlagewechsels der Zahnräder 14 und 16 mittels der elektrischen Maschine 20 ein Zugbetrieb des Getriebes 30 bewirkt, insbesondere dadurch, dass die elektrische Maschine 20 als Elektromotor betrieben wird und somit wenigstens ein Drehmoment bereitstellt, welches von der elektrischen Maschine 20, insbesondere von ihrem Rotor, in das Getriebe 30 eingeleitet wird. Insbesondere wird der Anlagewechsel in Abhängigkeit von wenigstens einer der genannten Drehzahlen abgebremst, sodass die elektrische Maschine 20 zum Abbremsen des Anlagewechsels in Abhängigkeit von der wenigstens einen Drehzahl betrieben und dabei insbesondere gesteuert oder geregelt wird.

Da die elektrische Maschine 20 zum Abbremsen des Anlagewechsels genutzt wird, können zusätzliche und separate Komponenten wie beispielsweise Dämpfungs- und Reibungselemente zum Dämpfen des Anlagewechsels vermieden werden, sodass die Teileanzahl, das Gewicht und die Kosten des Antriebsstrangs 10 in einem besonders geringen Rahmen gehalten werden können. Außerdem können die Kosten, das Gewicht und der Bauraumbedarf des Antriebsstrangs 10 besonders gering gehalten werden, da der elektrischen Maschine 20 eine Doppelfunktion zukommt. Einerseits wird die elektrische Maschine 20 zum elektrischen Antreiben der Räder genutzt. Andererseits wird die elektrische Maschine 20 zum gezielten und somit aktiven Abbremsen des Anlagewechsels genutzt, wodurch ein besonders hoher Fahrkomfort darstellbar ist.

## Patentansprüche

1. Verfahren zum Betreiben eines einen zu- und abschaltbaren Vierradantrieb (18) und wenigstens zwei miteinander kämmende Zahnräder (14, 16) aufweisenden Antriebsstrangs (10) eines Kraftwagens, bei welchem der Vierradantrieb (18) abgeschaltet wird, indem wenigstens eine Kupplung (12) des Antriebsstrangs (10) geöffnet wird,
**dadurch gekennzeichnet, dass**
ein aus dem Abschalten resultierender Anlagewechsel der Zahnräder (14, 16) mittels einer elektrischen Maschine (20) des Antriebsstrangs (20) aktiv abgebremst wird.

2. Verfahren nach Anspruch 1,
**dadurch gekennzeichnet, dass**
der Antriebsstrang (10) wenigstens einen von der elektrischem Maschine (20) unterschiedlichen Antriebsmotor (22), eine von dem Antriebsmotor (22) antreibbare erste Achse (36) und eine von dem Antriebsmotor (22) über die Kupplung (12) antreibbare zweite Achse (44) aufweist, welche bei dem Abschalten des Vierradantriebs (18) von dem Antriebsmotor (22) abgekoppelt wird.

3. Verfahren nach Anspruch 2,
**dadurch gekennzeichnet, dass**
der Antriebsstrang (10) wenigstens ein Getriebe (30) aufweist, über welches die Achsen (36, 44) von dem Antriebsmotor (22) antreibbar sind.

4. Verfahren nach Anspruch 3,
**dadurch gekennzeichnet, dass**
zum Abbremsen des Anlagewechsels mittels der elektrischen Maschine (20) ein Zugbetrieb des Getriebes (30) bewirkt wird.

5. Verfahren nach Anspruch 4,
**dadurch gekennzeichnet, dass**
zum Bewirken des Zugbetriebs des Getriebes (30) die elektrische Maschine (20) wenigstens ein Drehmoment bereitstellt, welches von der elektrischen Maschine (20) in das Getriebe (30) eingeleitet wird.

6. Antriebsstrang (10) für einen Kraftwagen, mit einem zu- und abschaltbaren Vierradantrieb (18), mit wenigstens zwei miteinander kämmenden Zahnrädern (14, 16), und mit wenigstens einer Kupplung (12), welche zum Abschalten des Vierradantriebs (18) von einem geschlossenen Zustand in einen geöffneten Zustand umschaltbar ist,
**dadurch gekennzeichnet, dass**
der Antriebsstrang (10) wenigstens eine elektrische Maschine (20) aufweist, welche dazu ausgebildet ist, einen aus dem Abschalten resultierenden Anlagewechsel der Zahnräder (14, 16) aktiv abzubremsen.

## Claims

1. Method for operating a drive train (10) of a motor vehicle, said drive train having an engageable and disengageable four-wheel drive (18) and at least two intermeshing gears (14, 16), in which method the four-wheel drive (18) is switched off by the opening of at least one clutch (12) of the drive train (10),
**characterised in that**
a change of engagement of the gears (14, 16) resulting from the switching off is actively braked by means of an electric machine (20) of the drive train (20).

2. Method according to claim 1,
**characterised in that**
the drive train (10) has at least one drive motor (22) different from the electric machine (20), a first axle (36) which is drivable by the drive motor (22) and a second axle (44) which is drivable by the drive motor (22) via the clutch (12) and which is decoupled from the drive motor (22) upon switching off the four-wheel drive (18).

3. Method according to claim 2,
**characterised in that**
the drive train (10) has at least one transmission (30) via which the axles (36, 44) are drivable by the drive motor (22).

4. Method according to claim 3,
**characterised in that**
to brake the change of engagement, a traction operation of the transmission (30) is effected by means of the electric machine (20).

5. Method according to claim 4,
**characterised in that**
to effect the traction operation of the transmission (30), the electric machine (20) provides at least one torque which is introduced into the transmission (30) by the electric machine (20).

6. Drive train (10) for a motor vehicle, having an engageable and disengageable four-wheel drive (18), having at least two intermeshing gears (14, 16), and having at least one clutch (12) which can be switched from a closed state to an opened state in order to switch off the four-wheel drive (18),
**characterised in that**
the drive train (10) has at least one electric machine (20) which is designed to actively brake a change of engagement of the gears (14, 16) resulting from the switching off.

## Revendications

1. Procédé pour faire fonctionner une chaîne cinématique (10) présentant une transmission à quatre roues motrices (18) pouvant être mise en et hors service et au moins deux roues dentées (14, 16) s'engrenant l'une avec l'autre d'un véhicule automobile, pour lequel la transmission à quatre roues motrices (18) est mise hors service en ce qu'au moins un embrayage (12) de la chaîne cinématique (10) est ouvert,
**caractérisé en ce qu'**
un changement d'appui résultant de la mise hors service des roues dentées (14, 16) est activement freiné au moyen d'une machine électrique (20) de la chaîne cinématique (20).

2. Procédé selon la revendication 1,
**caractérisé en ce que**
la chaîne cinématique (10) présente au moins un moteur d'entraînement (22) différent de la machine électrique (20), un premier axe (36) entraînable par le moteur d'entraînement (22) et un second axe (44) entraînable par le moteur d'entraînement (22) par le biais de l'embrayage (12), qui est découplé lors de la mise hors service de la transmission à quatre roues motrices (18) du moteur d'entraînement (22).

3. Procédé selon la revendication 2,
**caractérisé en ce que**
la chaîne cinématique (10) présente au moins un engrenage (30), par le biais duquel les axes (36, 44) peuvent être entraînés par le moteur d'entraînement (22).

4. Procédé selon la revendication 3,
**caractérisé en ce qu'**
un mode de traction de l'engrenage (30) est provoqué pour le freinage du changement d'appui au moyen de la machine électrique (20).

5. Procédé selon la revendication 4,
**caractérisé en ce que**
pour la provocation du mode de traction de l'engrenage (30) la machine électrique (20) fournit au moins un couple qui est introduit par la machine électrique (20) dans l'engrenage (30).

6. Chaîne cinématique (10) pour un véhicule automobile, avec une transmission à quatre roues motrices (18) pouvant être mise en et hors service, avec au moins deux roues dentées (14, 16) s'engrenant l'une avec l'autre, et avec au moins un embrayage (12) qui peut être commuté pour la mise hors service de la transmission à quatre roues motrices (18) d'un état fermé dans un état ouvert,
**caractérisée en ce que**
la chaîne cinématique (10) présente au moins une machine électrique (20) qui est réalisée afin de freiner activement un changement d'appui résultant de la mise hors service des roues dentées (14, 16).
